## Europäisches Patentamt

## European Patent Office

## Office européen des brevets

(11) Veröffentlichungsnummer: **0 092 590**
A1

# EUROPÄISCHE PATENTANMELDUNG

(21) Anmeldenummer: **82103278.6**

(22) Anmeldetag: **19.04.82**

(51) Int. Cl.³: **F 04 C 29/00**
**C 10 G 7/04**

(43) Veröffentlichungstag der Anmeldung:
**02.11.83 Patentblatt 83/44**

(84) Benannte Vertragsstaaten:
**AT BE CH DE FR GB IT LI NL SE**

(71) Anmelder: **Airfina Etablissements**

**FL-9490 Vaduz(LI)**

(72) Erfinder: **Goepfert, Peter, Dipl.-Ing.**
**Chreuzacherweg 33**
**CH-8906 Bonstetten(CH)**

(74) Vertreter: **Troesch, Hans Alfred, Dr. Ing. et al,**
**Walchestrasse 19**
**CH-8035 Zürich(CH)**

(54) Verfahren zum Entfernen von Kondenswasser aus dem Einspritzöl eines Drehkolben- oder Schraubenkompressors sowie Drehkolben- oder Schraubenkompressor.

(57) Es ist ein Verfahren zu schaffen, welches mit wesentlich einfacheren Mitteln und auf natürliche Weise die schädliche Einwirkung von Kondenswasser im Einspritzöl von Drehkolben- und Schraubenkompressoren verhütet und dieses Kondenswasser in einfacher Art und Weise aus dem Oel zu beseitigen vermag. Bei einem derartigen Verfahren trennt man das Zweistoffgemisch Oel/Wasser durch fraktionierte Destillation. Dazu verbindet man das Innere des Oelbehälters (16) der Anlage beim Uebergang vom Last- in den Leerlaufbetrieb mit der Atmosphäre (12). Nach Absenkung des Druckes im Oelbehälter (16) - durch diesen Druck bedingt - verbindet dessen Inneres mit dem Ansaug des Kompressors und die Druckseite mit der Atmosphäre. Auf diese Werte kann man den Unterdruck zum Verdampfen des Wassers mittels des Kompressors selbst erzeugen, da das Gemisch unter verminderten Druck gesetzt und das Wasser durch Verdampfung ausgetrieben wird.

EP 0 092 590 A1

Croydon Printing Company Ltd

- 1 -

## Verfahren zum Entfernen von Kondenswasser aus dem Einspritzöl eines Drehkolben- oder Schraubenkompressors sowie Drehkolben-oder Schraubenkompressor

Die vorliegende Erfindung betrifft ein Verfahren zum Entfernen von Kondenswasser aus dem Einspritzöl eines Drehkolben- oder Schraubenkompressors sowie einen Drehkolben- oder Schraubenkompressor.

Bei der Verdichtung von Luft oder von Gasen im offenen Kreislauf wird mit der Erhöhung des Druckes das Volumen verkleinert. Dadurch nimmt der Wassergehalt bezogen auf die Volumeneinheit und damit die relative Feuchte in dem Masse zu, wie sich das Volumen verkleinert. Weil bei der Verdichtung gleichzeitig eine Temperaturerhöhung stattfindet, fällt beim Verdichtungsvorgang trotzdem noch kein Wasser aus.

Im Nachkühler und in den Leitungen sinkt die Temperatur wieder, der Taupunkt der komprimierten Luft resp. des Gases, wird unterschritten und es kommt zum Ausscheiden von flüssigem Wasser. Bei verschiedenen Betriebszuständen wird der Taupunkt bereits vor dem Nachkühler - bei Einspritzöl-gekühlten Verdichtern noch im Oelkreislauf - unterschritten. Dies trifft insbesondere zu:

- 2 -

- beim Anfahren, und zwar bis die Betriebstemperatur der Anlage erreicht worden ist,

- beim Betrieb der Anlage unter Teillast

- bei anderen Betriebszuständen, die nicht dem Auslegepunkt des Kühlsystems entsprechen (Winter bei Luftkühlung)

- bei Betrieb unter erhöhtem Druckverhältnis.

Bei der Anwendung der Intensiv-Einspritzung (CH-Patent 557 958 und CH-PS 564 153) gewinnen diese Probleme zusätzlich an Bedeutung. Die Intensiv-Einspritzung bewirkt eine Kühlung bereits während der Kompression. Damit wird ein nahezu isothermer Kompressionsverlauf mit einem minimalen energetischen Aufwand erzielt. Der Kompressor arbeitet mit einem hohen Wirkungsgrad, besonders wenn auf niedrigem Temperaturniveau gefahren wird.

Das Kondenswasser mischt sich zwangsläufig mit dem Einspritzöl, und es entsteht zunächst eine Oel-Wasser-Emulsion. Bei zunehmendem Wassergehalt im Oel entsteht unter der Einwirkung von Druck und Temperatur eine irreversible Verseifung des Oels. Bei der weiteren Verwendung des teilweise verseiften Schmieröls zersetzt sich dieses und wird in Kürze unbrauchbar.

Der zersetzte Schmierstoff kann zu Störungen und schliesslich zur Beschädigung des Verdichters führen.

- 3 -

Das beschriebene Problem kann im allgemeinen dadurch teilweise gelöst werden, dass für den Kompressorbetrieb unter Teillast eine Drosselregulierung vorgesehen wird. Die Energie-Aufnahme ist dabei nur unwesentlich geringer als bei Vollast. Dadurch wird der Arbeitsprozess im Verdichter auf einem erhöhten Temperaturniveau gehalten und die beschriebene Unterschreitung des Taupunktes tritt nicht ein.

Diese Lösung hat jedoch den Nachteil eines hohen Energiebedarfs im Teillastbereich.

Weitere Lösungen (DE-OS 27 15 610, EP 0 007 295) steuern die Kühlwirkung des Systems entsprechend dem jeweiligen Betriebszustand.

Bei beiden Lösungen kann jedoch nicht verhindert werden, dass beim Anfahren des Verdichters aus dem kalten Zustand bis zum Erreichen der Betriebstemperatur Kondensatbildung auftritt. Ebenso tritt bei beiden Systemen Kondensatbildung auf, wenn die Luftfeuchtigkeit der angesaugten Luft oder des Gases sehr hoch ist.

Eine weitere Lösung (DE-OS 26 13 849) verwendet anstelle von Mineral-Schmieröl eine Einspritzflüssigkeit, welche mit dem anfallenden Kondenswasser keine Emulsion bildet. Das sich in der Einspritzflüssigkeit ansammelnde Kondenswasser wird in einem separaten Absetzbecken unter Ausnützung des Dichte-

- 4 -

Unterschieds zwischen Wasser und der Einspritzflüssigkeit vom Oel getrennt.

Diese Art des Vorgehens befriedigt in der Praxis nicht, da es das Problem entweder nicht völlig löst oder auf eine Ersatzsubstanz ausweicht, deren allgemeine Anwendung für Pressluftverbraucher nicht gesichert ist.

In diesem Sinne bezweckt die vorliegende Erfindung die Schaffung eines Verfahrens, welches mit wesentlich einfacheren Mitteln und auf natürliche Weise die schädliche Einwirkung von Kondenswasser im Einspritzöl verhütet und dieses Kondenswasser in einfacher Art und Weise aus dem Oel zu beseitigen vermag.

Ein derartiges Verfahren zeichnet sich dadurch aus, dass man das Zweistoffgemisch Oel/Wasser durch fraktionierte Destillation trennt.

Ein Drehkolben- oder Schraubenkompressor, welcher dieses Verfahren verwendet, ist gekennzeichnet durch den Wortlaut des Anspruchs 6.

Die Erfindung wird anschliessend beispielsweise anhand einer Zeichnung erläutert.

Diese zeigt ein Anlagenschema eines Luftkompressors.

Dem System des Kompressors wird ein automatischer thermischer Trennprozess angegliedert, welcher das im Schmiermittel enthaltene Wasser entfernt.

Man kann dazu in idealer Weise die Leerlaufperioden des Kompressors benützen. Dabei wird das Reservoir

- 5 -

mit der Einspritzöl-Wasser-Emulsion auf einen subatmosphärischen Druck gebracht. Durch das Absenken des Drucks des Zweistoffgemisches Oel/ Wasser, welches sich auf einer Temperatur von 60° bis 80°C befindet, beginnt das Wasser im Gemisch zu sieden. Bei der einsetzenden Destillation wird das im Oel enthaltene Wasser verdampft und abgeblasen.

Die Wirksamkeit dieser Destillation wird durch den grossen Flüchtigkeitsunterschied (Dampfdruckkurven) von Wasser und Schmieröl begünstigt. Der Dampfdruck von Wasser beträgt bei 80°C ca. 0,48bar derjenigen eines typischen Mineralschmieröls $5,6 \cdot 10^{-5}$bar. Die Anwesenheit von Oel verändert daher die Dampfdruckkurve des Wassers wenig. Das Kondenswasser verhält sich demnach als reine Komponente.

Der zur Destillation notwendige Unterdruck wird entweder vom Kompressor selbst während der Leerlaufphasen oder, z.B. bei Grossanlagen, mittels einer separaten Vakuumpumpe erzeugt.

Diese Massnahme bewirkt, dass sich der Kondensatanteil im Einspritzöl nie soweit akkumulieren kann, dass eine Verseifung des Oels mit den bekannten Zersetzungserscheinungen eintritt. Die Gebrauchsfähigkeit des Einspritzöls wird dadurch erheblich verlängert.

Auf eine energetisch ungünstige Drosselregulierung kann verzichtet werden. Es wird möglich, den Ver-

- 6 -

dichter unter einer Teillast von 5% oder weniger zu betreiben, ohne irgendwelche Nachteile der vorbeschriebenen Art in Kauf nehmen zu müssen.

Ferner können mit demselben Kompressor gegenüber dem Normalbetrieb erhöhte Drücke erzeugt werden, bei denen das anfangs erwähnte Problem verschärft auftritt. Die praktischen Anwendungsgrenzen werden somit erweitert.

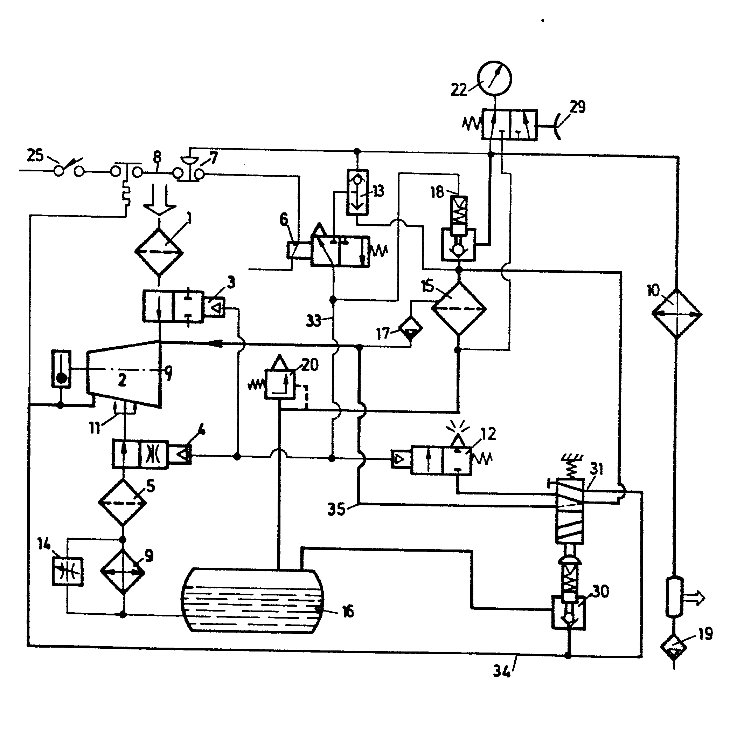

Im folgenden wird anhand der Figur gezeigt, wie das vorbeschriebene Verfahren in der Praxis an einer Anlage durchgeführt werden kann.

Die in der Figur als Schema dargestellte Druckluftanlage umfasst einen Ansaugfilter 1 mit nachgeschaltetem Ansaugventil 3, dessen Verbindungsleitung in einen Kompressor 2 mündet. Es handelt sich um einen Kompressor, wie er beispielsweise in der CH-PS 557 958 und der CH-PS 564 153 beschrieben ist, wobei als Kühlmittel Oel verwendet wird. Unmittelbar vor der Einspritzstelle 11 befindet sich ein Oel-Regelventil 4 mit vorgeschaltetem Oelfilter 5, einem Oelkühler 9 und einer zu einem Oelbehälter 16 führenden Leitung, welche der Versorgung der Stelle 11 mit Kühlöl dient.

In der Anlage befindet sich ferner ein Elektroventil 6 mit nachgeschaltetem Druckregler 7 sowie einem nachfolgenden Thermostaten 8 und einem Schalter 25.

Für das Oel-Druckluft-Gemisch führt eine Leitung vom Kompressor 2 in ein Mindestdruckventil 30. Diesem ist wiederum ein Vierwegeventil 31 nachgeschaltet. Ein Entlüftungsventil 12, über eine Luftleitung mit dem Vierwegeventil 31 verbunden, ist seinerseits mit dem Oel-Regelventil 4 über eine Steuerleitung verbunden, welches Ventil auf die Oeleinspritzung an der Stelle 11 des Kompressors 2 wirkt. In der Anlage befindet sich ausserdem ein Nachkühler 10, ein Umschaltventil 13, ein Thermoregler 14, ein Entöler 15 und ein Oel-Rückförderer 17. Dem Entöler 15 nachgeschaltet ist ein zweites Rückschlag- und Mindestdruckventil 18, während für das Abführen von Kondensat ein Ablasser 19 dient. Weiterhin gehört zur Anlage ein Sicherheitsventil 20 sowie ein Manometer 22 und ein Kontrollorgan 29 des Entölers 15.

Beim Betrieb unter Last saugt der Kompressor 2 Umgebungsluft durch den Ansaugfilter 1 und das geöffnete Ansaugventil 3 an. Die während des Kompressionsvorganges durch die Einspritzdüsen an der Stelle 11 eingespritzte Oelmenge kommt aus dem Oelbehälter 16 und durchläuft den Oelkühler 9, den Oelfilter 5 und das voll geöffnete Oel-Regelventil 4. Beim Kaltstart wird dieser Kühler 9 mittels Thermoregler 14 vorerst überbrückt, um ein schnelles Erreichen der Betriebstemperatur oberhalb der Taupunkttemperatur des Wassers bei dem herrschenden Druck zu gewährleisten.

- 8 -

Der Betriebsdruck in der Leitung 34 hält das Mindestdruckventil 30 offen. Das Druckluft-Oelgemisch gelangt in den Oelbehälter 16, in welchem ein Grossteil des Einspritzöls abgeschieden wird. Im Oelabscheider 15 wird das restliche noch in der Druckluft vorhandene Oel abgeschieden. Danach verlässt
die komprimierte Luft das System über das Mindestdruck- und Rückschlagventil 18 durch den Nachkühler 10.

Beim Uebergang des Kompressors 2 in den Leerlauf
schliesst das Mindestdruck- und Rückschlagventil 18
die Luftleitung nach dem Oelabscheider 15 zum Nachkühler 10 und steuert dadurch das Ansaugventil 3 in
Schliesslage. Gleichzeitig wird das Oelregulierventil 4 betätigt, welches die eingespritzte Oelmenge
stark drosselt. Das Entlüftungsventil 12 wird über
eine Steuerleitung 33 in seine Oeffnungslage geschaltet. Dadurch wird das Innere des Oelbehälters
16 über den Entöler 15 und das Vierwegeventil 31
in der dargestellten Schaltlage über das Ventil 12
mit der Atmosphäre verbunden; daher sinkt der Druck
im Oelbehälter 16 auf den Aussendruck ab.

Diese Druckabsenkung im Oelbehälter 16 bewirkt, dass
auch das Mindestdruckventil 30 schliesst und dadurch
das Vierwegeventil 31 betätigt (gestrichelte Schaltlage). Dieses verbindet den Ausgang des Entlüftungsventils 12 über die Leitung 34 dem Kompressor 2 der
in die Atmosphäre fördert. Durch das Vierwegeventil
31 wird über eine Leitung 35 auch der Ansaug des
Kompressors 2 mit dem Oelbehälter 16 verbunden.
Dadurch entsteht im Oelbehälter 16 ein starker Unterdruck. Dieser entspricht dem Dampfdruck der Wasserkomponente im Oel-Wasser-Gemisch, und das im warmen Oel enthaltene Kondenswasser wird destilliert. Es wird als Dampf durch den Kompressor 2 angesaugt und über das Vierwegventil 31 und das Entlüftungsventil 12 ins Freie befördert. Der im Oelbehälter 16 entstehende Unterdruck hängt von der Spannung der Feder des Mindestdruckventils 30 ab; diese wird so eingestellt, dass genügend Druckdifferenz zur Schmierung des Kompressors während des Leerlaufs vorliegt und gleichzeitig das Ventil so weit öffnet, dass das Schmier- und Kühlöl in den Oelbehälter zurückfliessen kann.

0092590

- 10 -

Patentansprüche:

1. Verfahren zum Entfernen von Kondenswasser aus
dem Einspritzöl eines Drehkolben- oder Schraubenkompressors, dadurch gekennzeichnet, dass
man das Zweistoffgemisch Oel/Wasser durch
fraktionierte Destillation trennt.

2. Verfahren, vorzugsweise nach mindestens einem
der Ansprüche, dadurch gekennzeichnet, dass
man das Gemisch unter verminderten Druck setzt,
um das Wasser durch Verdampfung auszutreiben.

3. Verfahren, vorzugsweise nach mindestens einem
der Ansprüche, dadurch gekennzeichnet, dass
man den Unterdruck zum Verdampfen des Wassers
mittels des Kompressors selbst oder mittels
eines Hilfs-Kompressors oder einer Vakuumpumpe
erzeugt.

4. Verfahren, vorzugsweise nach mindestens einem
der Ansprüche, dadurch gekennzeichnet, dass
man das Innere des Oelbehälters (16) beim Uebergang vom Last- in den Leerlaufbetrieb mit der
Atmosphäre (12) verbindet und nach Absenkung
des Druckes im Oelbehälter (16) - durch diesen
Druck bedingt - dessen Inneres mit dem Ansaug
des Kompressors verbindet und die Druckseite
mit der Atmosphäre.

Patentansprüche:

1. Verfahren zum Entfernen von Kondenswasser aus dem Einspritzöl eines Drehkolben- oder Schraubenkompressors, wobei man das Zweistoffgemisch Oel/Wasser durch fraktionierte Destillation trennt, dadurch gekennzeichnet, dass man das Innere des Oelbehälters (16) beim Uebergang vom Last- in den Leerlaufbetrieb mit der Atmosphäre (12) verbindet und nach Absenkung des Druckes im Oelbehälter (16) -durch diesen Druck bedingt - dessen Inneres mit dem Ansaug des Kompressors verbindet und die Druckseite mit der Atmosphäre.

2. Verfahren nach Anspruch 1, dadurch gekennzeichnet, dass man die Umsteuerungen der Ventile automatisiert, z.B. mittels im Luftsystem vorhandener Drucke.

3. Verfahren nach Anspruch 1, dadurch gekennzeichnet, dass man die Druckabsenkung intermittierend vornimmt.

4. Drehkolben- oder Schraubenkompressor, vorzugsweise nach mindestens einem der Ansprüche, gekennzeichnet durch Anlageteile (18, 31), die bei einem vorbestimmten Grenzwert der Leistungsabgabe den Ansaugraum des Kompressors (2) mit dem Oel/Wasserbehältnis (16) verbinden (35), um in diesem den Siedepartialdruck des Wassers zu erzeugen.

5. Kompressor, vorzugsweise nach mindestens einem der Ansprüche, gekennzeichnet durch ein Mindestdruckventil (30) und ein diesem nachgeschaltetes Mehrwegventil (13) sowie ein von einem zweiten Mindestdruckventil (18) gesteuertes Entlüftungsventil (12), wobei im Leerlauf

- 11 -

5. Verfahren, vorzugsweise nach mindestens einem der Ansprüche, dadurch gekennzeichnet, dass man die Umsteuerungen der Ventile automatisiert, z.B. mittels im Luftsystem vorhandener Drucke.

6. Drehkolben- oder Schraubenkompressor, vorzugsweise nach mindestens einem der Ansprüche, gekennzeichnet durch Anlageteile (18, 31), die bei einem vorbestimmten Grenzwert der Leistungsabgabe den Ansaugraum des Kompressors (2) mit dem Oel/Wasserbehältnis (16) verbinden (35), um in diesem den Siedepartialdruck des Wassers zu erzeugen.

7. Kompressor, vorzugsweise nach mindestens einem der Ansprüche, gekennzeichnet durch ein Mindestdruckventil (30) und ein diesem nachgeschaltetes Mehrwegventil (31) sowie ein von einem zweiten Mindestdruckventil (18) gesteuertes Entlüftungsventil (12), wobei im Leerlauf diese Ventile eine Verbindung zwischen einem Oel/Wasserbehälter (16) und der Atmosphäre sicherstellen.

8. Kompressor, vorzugsweise nach mindestens einem der Ansprüche, gekennzeichnet durch ein das Mehrwegventil (31) steuerndes zweites Mindestdruckventil (30), das bei zum Atmosphärendruck absinkendem Druck im Behälter (16) die Druckseite des Kompressors (2) mit der Atmosphäre verbindet und das Innere des Behälters (16) mit dessen Saugseite.

diese Ventile eine Verbindung zwischen einem Oel/ Wasserbehälter (16) und der Atmosphäre sicherstellen.

6. Kompressor, vorzugsweise nach mindestens einem der Ansprüche, gekennzeichnet durch ein das Mehrwegventil (31) steuerndes zweites Mindestdruckventil (30), das bei zum Atmosphärendruck absinkendem Druck im Behälter (16) die Druckseite des Kompressors (2) mit der Atmosphäre verbindet und das Innere des Behälters (16) mit dessen Saugseite.

7. Kompressor, vorzugsweise nach mindestens einem der Ansprüche, dadurch gekennzeichnet, dass Mittel, z.B. ein Zeitverzögerungsglied in der Steuerung, angeordnet sind, um den Druck intermittierend abzusenken.

**EUROPÄISCHER RECHERCHENBERICHT**

Nummer der Anmeldung

| | EINSCHLÄGIGE DOKUMENTE | | EP 8210327 8.6 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE - A - 2 157 674 (LAMENDIN)<br>* Seite 2, Zeilen 3-9, 25-27; Seite 3, Zeilen 1-17; Patentansprüche *<br>-- | 1-3 | F 04 C 29/00<br>C 10 G 7/04 |
| A | DE - A - 2 153 162 (METALLGESELL-SCHAFT A.G.)<br>* Patentansprüche; Fig. 1-3 *<br>-- | 1-3 | |
| A | GB - A - 1 533 098 (N.F.K. KABEL B.V.)<br>* Seite 1, Zeilen 15-27; Patentanspruch 1 *<br>-- | 1,2 | |
| A | CH - A - 221 706 (MICAFIL)<br>* Seite 1, Zeilen 1-17; Seite 2, Zeilen 16-45; Patentanspruch *<br>-- | 1,2 | |
| A | GB - A - 743 253 (BRITISH PETROLEUM COMPANY)<br>* Seite 2, Zeilen 3-120; Seite 3, Zeilen 1-30; Fig. 1-3 *<br>-- | 1,2 | |
| A | CH - A - 296 672 (GEBRÜDER SULZER)<br>-- | 1 | |

**RECHERCHIERTE SACHGEBIETE (Int. Cl. ³)**

F 04 C 18/00
F 04 C 29/00
B 01 D 1/00
B 01 D 3/00
B 01 D 19/00
C 10 G 7/00

Der vorliegende Recherchenbericht wurde für alle Patentansprüche erstellt.

| Recherchenort<br>WIEN | Abschlußdatum der Recherche<br>10-12-1982 | Prüfer<br>WITTMANN |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**0092590**

Europäisches
Patentamt

**EUROPÄISCHER RECHERCHENBERICHT**

Nummer der Anmeldung

EP 82103278.6

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der Maßgeblichen Teile | | betrifft Anspruch | |
| A,D | CH - A - 557 958 (AIRFINA)<br>-- | | | |
| A,D | DE - A1 - 2 715 610 (GARDNER-DENVER)<br>---- | | | |
| | | | | **RECHERCHIERTE SACHGEBIETE (Int. Cl.³)** |